# FASCICULE DE BREVET EUROPEEN

(11) **EP 1 001 547 B1**
(45) Date de publication et mention de la délivrance du brevet: **01.08.2001**
(21) Numéro de dépôt: 99402267.1
(22) Date de dépôt: 16.09.1999
(51) Int. Cl.: H04B 1/38, H04R 1/22, H04M 1/03

(54) **Téléphone mobile à écoute amplifiée**
Mobilfon mit Lauthöreinrichtung
Loudspeaking mobile telephone

(30) Priorité: 23.09.1998 FR 9812063
(43) Date de publication de la demande: 17.05.2000
(73) Titulaire: SAGEM SA, 75783 Paris Cédex 16 (FR)
(72) Inventeur: Romao, M. Fernando, Cabinet Ch. Schmit et Associés, 95000 Cergy (FR)
(74) Mandataire: Schmit, Christian Norbert Marie

(56) Documents cités:
- EP-A- 0 656 692
- EP-A- 0 695 044
- WO-A-98/20622
- DE-A- 2 948 034
- US-A- 5 224 151
- US-A- 5 438 482
- US-A- 5 731 964

## Description

La présente invention a pour objet un téléphone mobile muni d'un haut-parleur et notamment un téléphone mobile muni d'un haut-parleur et d'un dispositif pour commuter entre une écoute privée, réservée à un seul utilisateur, et une écoute mains libres. Dans l'écoute mains libres le son est diffusé par le haut-parleur avec une puissance suffisante pour que l'utilisateur ne soit pas obligé de porter l'appareil près de son oreille, ce qui autorise par ailleurs une utilisation en conférence. Le but de l'invention est d'amplifier l'émission acoustique et notamment d'améliorer cette double utilisation.

On connaît les téléphones mobiles munis d'un haut-parleur et de circuits permettant l'excitation du haut-parleur avec une puissance faible, pour une écoute privée, et avec une puissance élevée pour une écoute mains libres. Compte tenu d'une puissance nominale élevée, l'écoute privée ne pose généralement pas de problèmes. Toutefois l'invention apporte aussi son amélioration à une utilisation qui ne serait que privée. Par contre, l'écoute mains libres présente des problèmes de puissance et des problèmes de distorsion. Il apparaît en effet que pour une réalisation donnée, même si le haut-parleur installé dans le téléphone mobile le supporte, il ne sert à rien de l'exciter avec un signal électrique très puissant. Du fait de l'agencement des différentes parties du téléphone mobile, le son ne peut acoustiquement pas s'y développer suffisamment. Il en résulte au mieux une limite de la puissance acoustique transmissible, et plus généralement une distorsion des sons transmis. Pour l'essentiel la puissance sonore transmissible est liée à la taille d'une enceinte résonnante associée au haut-parleur, que celui-ci soit un haut-parleur à membrane ou une céramique vibrante.

L'invention a pour objet de remédier à cet inconvénient d'une manière très simple. Du fait de la miniaturisation du téléphone mobile il apparaît en effet qu'une enceinte résonnante associée à un haut-parleur pour augmenter la puissance acoustique transmise est normalement petite. Dans l'invention on a remarqué qu'une architecture retenue pour la construction des téléphones mobiles, et en particulier l'obligation de souscrire aux normes de compatibilité électromagnétique, conduisaient à ce que les circuits des téléphones mobiles soient blindés. Les blindages constituent ainsi des cavités à l'intérieur desquelles sont situés des circuits électroniques. Des téléphones mobiles avec des blindages tels que décrits dans le préambule de la revendication 1 sont par exemple connus du document EP-A-0 656 692. Dans l'invention on a eu l'idée de percer ces cavités de blindage (au moins une cavité) par un ensemble de trous. Ce faisant, on peut augmenter le volume de l'enceinte résonnante en lui associant le volume des cavités de blindage avec lesquelles elle communique par ces trous. En pratique, le volume de résonance est alors presque doublé provoquant une amélioration très sensible de la puissance transmise notamment en utilisation mains libres.

Il est connu du document DE-A-2 948 034 d'associer deux cavités resonnantes dans un téléphone. Cependant aucun des éléments utilisés pour constituer ces cavités n'est un élément d'un blindage.

L'invention a donc pour objet un téléphone mobile muni d'un circuit blindé et d'un haut-parleur en regard, caractérisé en ce que le blindage du circuit blindé est ajouré pour augmenter la dimension d'une enceinte acoustique résonnante associée à ce haut-parleur.

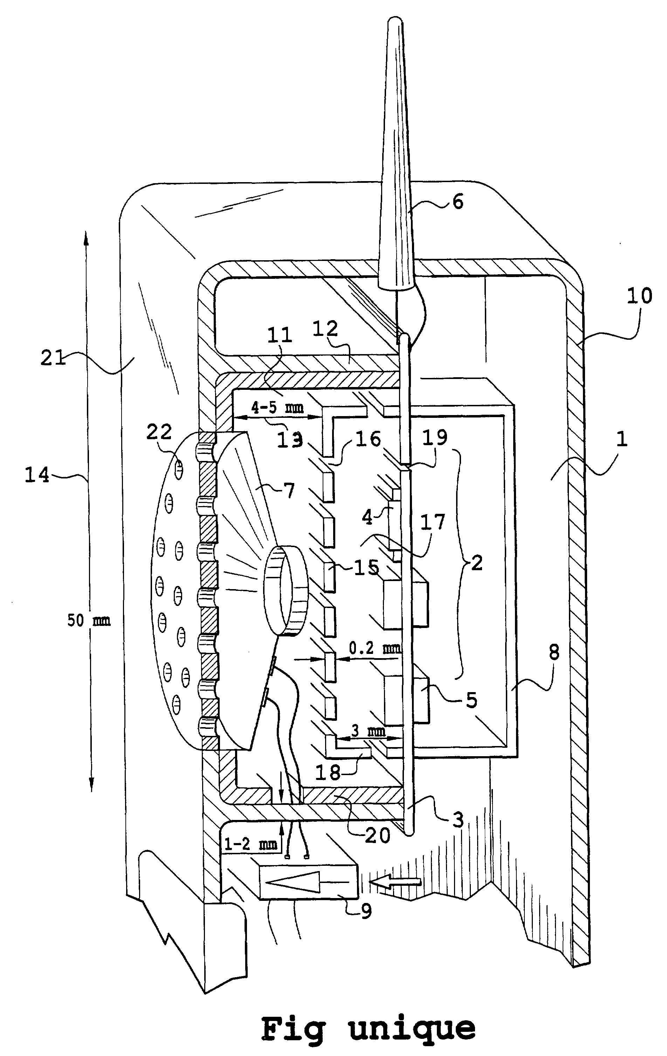

L'invention sera mieux comprise à la lecture de la description qui suit et à l'examen de la figure qui l'accompagne. Celles-ci ne sont présentées qu'à titre indicatif et nullement limitatif de l'invention. La figure 1 montre un téléphone mobile muni des moyens de l'invention.

Le téléphone mobile 1 de la figure 1 selon l'invention comporte un circuit 2 blindé. Le circuit 2 est par exemple réalisé sur une plaquette 3 de circuit imprimé comportant d'un seul côté ou de part et d'autre des composants tels que 4 ou 5 interconnectés entre eux. Du fait de la réalisation habituelle des téléphones mobiles 1, un aérien d'émission 6 est placé vers une extrémité haute du téléphone mobile 1. Vers le haut du téléphone mobile 1 se trouve également situé un haut-parleur 7 servant à diffuser les sons transmis par ce téléphone mobile. Le circuit 2 est en regard du haut-parleur 7. De cette construction il résulte naturellement que le circuit 2 est un circuit émetteur récepteur haute fréquence relié à l'aérien 6. L'invention reste utile cependant si le circuit 2 en regard du haut-parleur 7 n'est pas un émetteur récepteur. Ce qui importe est qu'il soit blindé par un blindage 8.

Dans la pratique les signaux émis par le circuit 2 sont dans une gamme de fréquence de l'ordre de 900 MHz (pour la norme GSM, ou de 1900 MHz pour la norme DCS à 2200 MHz pour la norme UMTS). En conséquence, le circuit 2 qui est naturellement proche et en regard du haut-parleur 7 est blindé par le blindage 8 pour éviter les émissions/réceptions électromagnétiques parasites. Les blindages assurent la compatibilité électromagnétique de tous les circuits réalisés dans le téléphone mobile, entre eux et avec des circuits d'autres appareils extérieurs, ceux qu'un utilisateur pourrait avoir à disposition dans son environnement par exemple une calculette, un micro-ordinateur.

Le téléphone mobile 1 comporte encore un circuit 9 de commutation pour transmettre au haut-parleur 7 un signal à une amplitude donnée ou un signal à une amplitude amplifiée pour permettre respectivement un usage privé ou un usage mains libres du téléphone mobile 1. Le circuit 9 peut être commandé par ailleurs par des commandes appliquées par l'utilisateur. Eventuellement le circuit 9 peut être commandé par un traitement du signal reçu lui-même.

Le haut-parleur 7 est monté, dans un boîtier 10 du téléphone mobile 1, dans une enceinte 11 formant une caisse de résonance. Par exemple l'enceinte 11 comporte des parois 12 prenant appui respectivement sur le corps du boîtier 10 et sur le circuit imprimé 3. Dans un exemple de réalisation, où le circuit 2 est un circuit émetteur récepteur, l'enceinte 11 possède ainsi une hauteur 13 de l'ordre de 4 à 5 millimètres et une longueur et une largeur 14 sensiblement égales entre elles et à 50 millimètres. Le volume de l'enceinte 11 est normalement limité d'une part par le haut-parleur 7, et d'autre part sur l'arrière par une paroi 15 du blindage 8. Dans un exemple, le blindage 8 est un capot métallique de 0,2 millimètre d'épaisseur et forme une cavité de contenance des circuits 4 et 5 dont la hauteur est de l'ordre de 3 millimètres.

Selon l'invention, la paroi 15 est percée de trous 16 pour être ajourée. La dimension et la répartition des trous 16 sont calculées pour que la paroi 15 continue à exercer sa fonction de blindage électromagnétique. Notamment les signaux aux fréquences d'émission/réception (dans le cas où le circuit 2 serait un émetteur/récepteur) ne peuvent pas se propager à travers les trous 16 compte tenu d'une longueur d'onde de l'ordre de 15 centimètres à 30 centimètres de ces signaux. Une autre contrainte qui pèse sur la formation de ces trous 16 est d'assurer une bonne communication acoustique entre la cavité 11 résonnante de base et une cavité 17 résultant de l'espace situé entre le circuit 2 et la paroi 15. Dans la pratique on a trouvé que la réalisation de trous 16, de diamètre de l'ordre de 1 millimètre et séparés les uns des autres de 3 millimètres environ, convenait bien pour satisfaire à ces deux contraintes. Plutôt que de disposer les trous 16 sur une paroi 15 en regard du haut-parleur 7, il est possible de les réaliser sur des pieds-droits 18 du blindage 8 proches des parois 12.

Si le blindage 8 est situé de part et d'autre du circuit imprimé 3, il est envisageable de percer de la même façon le circuit imprimé 3 par des trous 19 pour augmenter encore le volume utile. Les trous 19 doivent être cependant assez gros. On a découvert en effet que des vias, c'est-à-dire des percements métallisés de liaisons électriques reliant entre elles les deux faces du circuit imprimé 3 étaient de taille insuffisante pour assurer une communication acoustique.

Le fait de réaliser des trous 16 dans le blindage 8 conduit à une légère dégradation du blindage électromagnétique. D'une part cette dégradation est limitée par un choix judicieux du nombre de trous, de leur répartition et de leur taille. De cette façon le blindage 8 reste compatible avec les normes en vigueur. D'autre part, pour réduire les éventuels effets néfastes de ce point de vue, il est prévu de munir l'intérieur de la cavité 11 d'une métallisation 20 qui vient contribuer à un meilleur blindage et à éviter les émissions parasites, notamment en haute fréquence.

Alors que le capot 8 est normalement en métal, selon l'invention on peut le réaliser en un matériau plus souple, par exemple en ABS et en métallisant une de ses faces, intérieure de préférence, ou extérieure. Les parois 12 de la cavité 11 seront de préférence réalisées dans le même matériau que celui du boîtier 10 du téléphone mobile 1. Elles seront par exemple en ABS et moulées en même temps que le corps du boîtier 10. Selon les réalisations, le haut-parleur 7 peut être directement débouchant sur une face externe du boîtier 10 ou être fixé en regard à l'intérieur d'une paroi 21 de ce boîtier. Dans ce cas à cet endroit, la paroi 21 est munie de trous 22 pour permettre la propagation du son.

## Revendications

1. Téléphone mobile (1) muni d'un circuit blindé (2), et d'un haut-parleur (7) en regard, caractérisé en ce que le blindage (8) du circuit blindé (2) est ajouré (16) pour augmenter la dimension d'une enceinte acoustique (11) résonnante associée à ce haut-parleur (7).

2. Téléphone mobile (1) selon la revendication 1, caractérisé en ce que le blindage (8) est en un matériau souple.

3. Téléphone mobile (1) selon l'une des revendications 1 à 2, caractérisé en ce que le blindage (8) est ajouré en regard du haut-parleur.

4. Téléphone mobile (1) selon l'une des revendications 1 à 3, caractérisé en ce que le haut-parleur est maintenu par un boîtier (10) du téléphone mobile formant enceinte (11) résonnante, une face interne (20) de ce boîtier étant métallisée.

5. Téléphone mobile (1) selon l'une des revendications 1 à 4, caractérisé en ce que le circuit blindé (2) est un émetteur/récepteur (6) du téléphone mobile (1).

6. Téléphone mobile (1) selon l'une des revendications 1 à 5, caractérisé en ce qu'il comporte un circuit (9) de commutation d'écoute entre une écoute privée et une écoute mains libres.

## Patentansprüche

1. Mobiltelefon (1) mit einer abgeschirmten Schaltung (2) und einem gegenüberliegend angeordnetenLautsprecher (7), dadurch gekennzeichnet, daß die Abschirmung (8) der abgeschirmten Schaltung (2) gelocht (16) ist, um die Abmessung eines diesem Lautsprecher (7) zugeordneten akustischen Resonanzraums (11) zu vergrößern.

2. Mobiltelefon (1) nach Anspruch 1, dadurch gekennzeichnet, daß die Abschirmung (8) aus einem biegsamen Material ist.

3. Mobiltelefon (1) nach einem der Ansprüche 1 und 2, dadurch gekennzeichnet, daß die Abschirmung (8) gegenüber dem Lautsprecher gelocht ist.

4. Mobiltelefon (1) nach einem der Ansprüche 1 bis 3, dadurch gekennzeichnet, daß der Lautsprecher von einem Gehäuse (10) des Mobiltelefons gehalten wird, der einen Resonanzraum (11) bildet, wobei eine Innenseite (20) dieses Gehäuses metallbeschichtet ist.

5. Mobiltelefon (1) nach einem der Ansprüche 1 bis 4, dadurch gekennzeichnet, daß die abgeschirmte Schaltung (2) ein Sender/Empfänger (6) des Mobiltelefons (1) ist.

6. Mobiltelefon (1) nach einem der Ansprüche 1 bis 5, dadurch gekennzeichnet, daß es eine Schaltkreis (9) zur Hörbetriebs-Umschaltung zwischen einem privaten Hörbetrieb und einem Freisprechbetrieb aufweist.

## Claims

1. A mobile telephone provided with a sheathed circuit (2) and a loudspeaker (7) facing it, wherein the sheathing (8) of the sheathed circuit (2) is open-worked (16) to increase the size (7) of a resonant acoustic enclosure (11) associated with this loudspeaker (7).

2. A mobile telephone (1) according to claim 1, wherein the sheathing (8) is made of a flexible material.

3. A mobile telephone (1) according to one of the claims 1 to 2, wherein the sheathing (8) is open-worked in a position facing the loudspeaker.

4. A mobile telephone (1) according to one of the claims 1 to 3, wherein the loudspeaker is held by a pack (10) of the mobile telephone forming a resonant acoustic enclosure (11), an internal face (20) of this pack being metallized.

5. A mobile telephone (1) according to one of the claims 1 to 4, wherein the sheathed circuit (2) is a transceiver (6) of the mobile telephone (1).

6. A mobile telephone (1) according to one of the claims 1 to 5, comprising a switching circuit (9) to switch over between private listening and hands-free listening.
